## Europäisches Patentamt

## European Patent Office

## Office européen des brevets

(19)

(11) Veröffentlichungsnummer: **0 038 478**
**B1**

(12) ## EUROPÄISCHE PATENTSCHRIFT

(45) Veröffentlichungstag der Patentschrift:
**19.10.83**

(21) Anmeldenummer: **81102694.7**

(22) Anmeldetag: **09.04.81**

(51) Int. Cl.³: **C 08 F 10/06,** C 08 F 4/64,
C 08 F 2/34

(54) Verfahren zum Herstellen von Homopolymerisaten oder Copolymerisaten des Propylens.

(30) Priorität: **19.04.80 DE 3015089**

(43) Veröffentlichungstag der Anmeldung:
**28.10.81 Patentblatt 81/43**

(45) Bekanntmachung des Hinweises auf die Patenterteilung:
**19.10.83 Patentblatt 83/42**

(84) Benannte Vertragsstaaten:
**AT BE DE FR GB IT NL**

(56) Entgegenhaltungen:
**DE-A-2 049 622**
**DE-A-2 539 103**

(73) Patentinhaber: **BASF Aktiengesellschaft,
Carl-Bosch-Strasse 38, D-6700 Ludwigshafen (DE)**

(72) Erfinder: **Juza, Dirk, Dr., Ottostrasse 23,
D-5047 Wesseling (DE)**
Erfinder: **Stein, Dieter, Dr., Woogstrasse 69,
D-6703 Limburgerhof (DE)**

## Verfahren zum Herstellen von Homopolymerisaten oder Copolymerisaten des Propylens

Die vorliegende Erfindung betrifft ein Verfahren zum Herstellen von Propylen-Homopolymerisaten oder Propylen-Copolymerisaten, die mehr als 50, insbesondere mehr als 80 Gewichtsprozent Propylen sowie weniger als 50, insbesondere weniger als 20 Gewichtsprozent anderer, 2 bis 6, insbesondere 2 bis 4 Kohlenstoffatome aufweisender $\alpha$-Monoolefine einpolymerisiert enthalten, durch Polymerisation des bzw. der zugrunde liegenden Monomeren — im folgenden kurz als »das Monomer« bezeichnet — mittels eines Katalysators, insbesondere eines Ziegler-Natta-Katalysators, bei Temperaturen von 40 bis 150, insbesondere 50 bis 110°C und Drücken von 10 bis 50, insbesondere 15 bis 40 bar in der Gasphase in einem zentrischen Rührbett mit dem Radius r und der Höhe h aus kleinteiligem Polymerisat unter Abfuhr der Polymerisationswärme durch Verdampfungskühlung, wobei man das Monomer kontinuierlich oder taktweise in eine Polymerisationszone einbringt und das Polymerisat kontinuierlich oder taktweise aus der Polymerisationszone austrägt, mit den Maßgaben, daß man (a) in der Polymerisationszone den Druck und die Temperatur in einem Bereich hält, der dem gasförmigen Zustand des Monomer entspricht, (b) gasförmiges, nicht durch Polymerisation verbrauchtes Monomer aus der Polymerisationszone austrägt, verflüssigt, speichert und flüssig in die Polymerisationszone wieder einbringt, (c) die Temperatur in der Polymerisationszone regelt mittels fortlaufender Messung der Temperatur und einer dadurch bei Temperaturänderung ausgelösten Änderung der pro Zeiteinheit eingebrachten Menge an flüssigem, in der Reaktionszone verdampfenden, Monomer, und (d) das durch Polymerisation verbrauchte Monomer durch Zufuhr von Frisch-Monomer ersetzt.

Verfahren dieser Art sind bekannt und lassen sich in der Praxis mit gutem Erfolg durchführen.

Im gegebenen Zusammenhang ist insbesondere auf das aus der DE-AS 2 049 622 (= GB-PS 1 354 020) bekannte Verfahren hinzuweisen; es kann im wesentlichen als Basis für das erfindungsgemäße Verfahren angesehen werden.

Diesem lag die Aufgabe zugrunde, das bekannte Verfahren so weiter auszugestalten, daß es mit noch besserem Erfolg durchgeführt werden kann. Wesentliche Zielsetzungen hierbei waren eine Erhöhung der Zeitspanne, über die das Verfahren ohne Störung betrieben werden kann, sowie eine Steigerung der zeitlichen Konstanz der Eigenschaften der Verfahrensprodukte, namentlich auch der morphologischen Eigenschaften.

Es wurde gefunden, daß die gestellte Aufgabe gelöst werden kann, wenn das eingangs definierte Verfahren derart ausgestaltet wird, daß man — in Kombination der Maßnahmen miteinander — (1) dem zentrischen Rührbett eine ausgewählte Dimension gibt, (2) das kleinteilige Polymerisat des Rührbetts in bestimmter Weise bewegt, (3) die zur Regelung der Temperatur in der Polymerisationszone dienenden Temperatur-Meßstellen in besonderen geometrischen Bereichen des Rührbetts anordnet, und (4) die von den einzelnen Temperatur-Meßorten kommenden Werte unter bestimmter Wichtung zu einer Regelgröße zusammenfaßt und mittels dieser den Regelvorgang auslöst.

Gegenstand der vorliegenden Erfindung ist dementsprechend ein Verfahren zum Herstellen von Propylen-Homopolymerisaten oder Propylen-Copolymerisaten, die mehr als 50, insbesondere mehr als 80 Gewichtsprozent Propylen sowie weniger als 50, insbesondere weniger als 20 Gewichtsprozent anderer, 2 bis 6, insbesondere 2 bis 4 Kohlenstoffatome aufweisender $\alpha$-Monoolefine einpolymerisiert enthalten, durch Polymerisation des bzw. der zugrunde liegenden Monomeren — im folgenden kurz als »das Monomer« bezeichnet — mittels eines Katalysators, insbesondere eines Ziegler-Natta-Katalysators, bei Temperaturen von 40 bis 150, insbesondere 50 bis 110°C und Drücken von 10 bis 50, insbesondere 15 bis 40 bar in der Gasphase in einem zentrischen Rührbett mit dem Radius r und der Höhe h aus kleinteiligem Polymerisat unter Abfuhr der Polymerisationswärme durch Verdampfungskühlung, wobei man das Monomer kontinuierlich oder taktweise in eine Polymerisationszone einbringt und das Polymerisat kontinuierlich oder taktweise aus der Polymerisationszone austrägt, mit den Maßgaben, daß man (a) in der Polymerisationszone den Druck und die Temperatur in einem Bereich hält, der dem gasförmigen Zustand des Monomer entspricht, (b) gasförmiges, nicht durch Polymerisation verbrauchtes Monomer aus der Polymerisationszone austrägt, verflüssigt, speichert und flüssig in die Polymerisationszone wieder einbringt, (c) die Temperatur in der Polymerisationszone regelt mittels fortlaufender Messung der Temperatur und einer dadurch bei Temperaturänderung ausgelösten Änderung der pro Zeiteinheit eingebrachten Menge an flüssigem, in der Reaktionszone verdampfenden, Monomer, und (d) das durch Polymerisation verbrauchte Monomer durch Zufuhr von Frisch-Monomer ersetzt. Das erfindungsgemäße Verfahren ist dadurch gekennzeichnet, daß

(1) im zentrischen Rührbett die Beziehung r : h = 1 : 1 bis 1 : 3, insbesondere 1 : 1,2 bis 1 : 2 erfüllt ist,

(2) das kleinteilige Polymerisat des zentrischen Rührbetts im peripheren Bereich des Rührbetts nach oben und im zentralen Bereich des Rührbetts nach unten bewegt wird, derart, daß im Rührbett eine Froudezahl von 0,4 bis 5, insbesondere 0,6 bis 3,5 gegeben ist,

(3) die Temperatur in der Polymerisationszone geregelt wird mittels gleichzeitiger Messung der Temperatur jeweils

(3.1) an mindestens einem Ort des durch die Beziehung $h \cdot \pi \cdot a^2$ — wobei a das innerste Zehntel des Radius r des zentrischen Rührbetts ist — bestimmten, geometrisch walzenförmigen, inneren Teil des Rührbetts, sowie

(3.2) an mindestens einem Ort des durch die Beziehung $h \cdot \pi \cdot r^2 - h \cdot \pi \cdot a^2$ bestimmten, geometrisch symmetrisch-hohlwalzenförmigen, äußeren Teil des Rührbetts,
mit den Maßgaben, daß die Gesamtzahl der Meßorte nicht mehr als zehn beträgt und daß die radiale Entfernung zwischen einem Meßort im inneren Teil (3.1) und einem Meßort im äußeren Teil (3.2) des Rührbetts nicht weniger als ein Zehntel von r beträgt, und

(4) die an den einzelnen Meßorten gleichzeitig ermittelten Ist-Temperaturen T zu einer Temperaturgröße $T_M$ zusammengefaßt werden und durch die Differenz der Temperaturgröße $T_M$ von deren Sollwert der Regelvorgang ausgelöst wird, bzw. die an den einzelnen Meßorten gleichzeitig ermittelten Temperaturdifferenzen $\Delta T$ zwischen der jeweiligen Ist- und Soll-Temperatur zu einer Differenzgröße $\Delta T_M$ zusammengefaßt werden und durch die Differenzgröße $\Delta T_M$ der Regelvorgang ausgelöst wird, mit der Maßgabe, daß beim Zusammenfassen der Ist-Temperaturen T bzw. der Temperaturdifferenzen $\Delta T$ jeder einzelne

Meßwert mit nicht weniger als $\dfrac{40}{n}$ %

Gewicht — wobei n für die Gesamtzahl der Meßorte steht — in die Temperaturgröße $T_M$ bzw. die Differenzgröße $\Delta T_M$ eingeht.

Zu dem erfindungsgemäßen Verfahren ist im einzelnen das folgende zu sagen:

A) Stoffliche Seite

Das zu polymerisierende Monomer kann das einschlägig übliche sein, also z. B. allein oder ein Gemisch aus Propylen mit einem oder mehreren anderen $C_2$- bis $C_6$-$\alpha$-Monoolefinen, wie Äthylen, n-Buten-1, n-Hexen-1 oder 4-Methylpenten-1. Wie sich gezeigt hat, eignet sich das erfindungsgemäße Verfahren besonders gut zum Herstellen von Propylen-Homopolymerisaten, binären Copolymerisaten aus Propylen und Äthylen sowie ternären Copolymerisaten aus Propylen, Äthylen und n-Buten-1. Die Polymerisate fallen in kleinteiliger Form als feinerer oder gröberer Grieß an, wobei die Teilchengröße — nicht anders als bei den einschlägigen bekannten Verfahren — von den im einzelnen gewählten Verfahrensbedingungen abhängt. Es läßt sich somit sagen, daß der Teilchendurchmesser der Polymerisate im allgemeinen im Bereich von etwa 0,03 bis 10 und insbesondere etwa 0,1 bis 5 mm liegt. Eine Agglomeration der Teilchen zu größeren Sekundärteilchen läßt sich beim erfindungsgemäßen Arbeiten weitgehend vermeiden, was sich vorteilhaft auf die morphologischen Eigenschaften der Verfahrensprodukte auswirkt.

Die Polymerisation selbst erfolgt mittels eines Katalysators; — wobei sich die einschlägig üblichen Katalysatoren anbieten, namentlich die Katalysatoren des Ziegler-Natta-Typs. Letztere gibt es bekanntlich in einer überaus großen Vielfalt, wovon sich besonders gut bewährt haben die Zwei-Komponenten-Katalysatoren aus (I) einer Titantrichlorid-Komponente und (II) einer Aluminiumalkyl-Komponente der allgemeinen Formel $AlR_3$ bzw. $ClAlR_2$ — worin R für einen $C_1$- bis $C_8$-Alkylrest steht — im Atomverhältnis Titan aus der Katalysator-Komponente (I) zu Aluminium aus der Katalysator-Komponente (II) von 1 : 1 bis 1 : 100.

Im Rahmen dieser Zwei-Komponenten-Katalysatoren hat man wiederum die Titantrichlorid-Komponente (I) in mannigfacher Weise ausgestaltet, wobei sich die folgenden — auch zur Verwendung im erfindungsgemäßen Verfahren geeigneten — vier Gruppen hervorheben:

(Ia) Titantrichloride als solche und Titantrichlorid-Cokristallisate mit Metallhalogeniden, insbesondere Aluminiumchlorid, etwa der Formel $TiCl_3 \cdot 1/3\ AlCl_3$. Siehe hierzu z. B. die US-PS 3 128 252 und 3 814 743.
Wie sich gezeigt hat, ist aus dieser Gruppe für den erfindungsgemäßen Zweck besonders gut geeignet ein sehr feinteiliges Cokristallisat der Formel $TiCl_3 \cdot 1/3\ AlCl_3$.

(Ib) Mit Elektronendonatoren bzw. Lewis-Basen modifizierte Titantrichloride bzw. Titantrichlorid-Cokristallisate der unter (Ia) bezeichneten Art. Derartige modifizierte Titantrichlorid-Katalysatorkomponenten gibt es in zahlreichen Varianten, da sie bekanntlich eine Reihe von Vorteilen mit sich bringen. Um unnötige Wiederholungen zu vermeiden sei im gegebenen Zusammenhang schlaglichtartig beispielsweise verwiesen auf die GB-PS 851 113 sowie die FR-PS 1 231 089.
Für den erfindungsgemäßen Zweck ist diese Gruppe am besten geeignet, namentlich sehr feinteilige Cokristallisate der Formel $TiCl_3 \cdot 1/3\ AlCl_3$, welche mit den folgenden Donatoren bzw. Basen modifiziert sind: Äther, wie dem Diisoamyläther und dem Diisopentyläther; Estern, wie dem Benzoesäureisoamylester und dem Phenylessigsäureäthylester; Phosphinen, wie dem Tributylphosphin; Phosphinoxiden, wie dem Tributylphosphinoxid; sowie Säureamiden, wie dem Hexamethylphosphorsäuretriamid.
Die Art und Weise der Modifizierung im einzelnen können die einschlägig üblichen sein, wobei z. B. hervorzuheben sind die für den erfindungsgemäßen Zweck besonders geeigneten Modifizierungen gemäß den DE-OS 2 301 136, 2 400 190, 2 441 541, 2 519 582, 2 658 936, 2 658 937, 2 658 939, 2 739 382 sowie auch 2 713 552 und 2 722 123.

(Ic) Sogenannte »voraktivierte« Titantrichloride bzw. Titantrichlorid-Cokristallisate der unter (Ia) bezeichneten Art. Dies sind bekanntlich Titantrichlorid-Katalysatorkomponenten, die vor dem eigentlichen Zusammenbringen mit der Aluminiumalkyl-Komponente (II) mit Aluminiumalkyl-Verbindungen des nämlichen Typs voraktiviert sind. Häufig geht man dabei von Titantetrachlorid aus, das durch die Aluminiumalkyl-Verbindung zu Titantrichlorid reduziert wird.

(Id) Titantrichloride und deren Cokristallisate, die sowohl mit Elektronendonatoren bzw. Lewis-Basen modifiziert als auch voraktiviert sind. Solche Titantrichlorid-Katalysatorkomponenten können in gewisser Weise als eine Kombination der unter (Ib) und (Ic) bezeichneten aufgefaßt werden. Ein typisches Beispiel ist der DE-OS 2 335 047 zu entnehmen.

Insgesamt läßt sich somit sagen, daß die stoffliche Seite des erfindungsgemäßen Verfahrens als solche im Rahmen des einschlägig üblichen liegt.

## B) Verfahrenstechnische Seite

Sie hat ihren tiefsten Ursprung in den Techniken zum Herstellen von Homo- oder Copolymerisaten des Propylens in der Gasphase wie sie bekanntgeworden sind z. B. aus den DE-AS 1 217 071, 1 520 307 und 1 520 373. Die Prinzipien dieser Techniken sind unbeschadet ihres Alters sinngemäß voll beim erfindungsgemäßen Verfahren anwendbar; womit sich insoweit nähere Ausführungen erübrigen.

In seinen spezielleren Aspekt basiert das erfindungsgemäße Verfahren — wie eingangs bereits dargelegt — im wesentlichen auf dem aus der DE-AS 2 049 622 bekannten Verfahren; es bedarf daher auch insoweit keiner besonderer Erläuterungen.

Indes ist zu den kennzeichnenden Merkmalen des erfindungsgemäßen Verfahrens das folgende zu sagen:

(1) Im zentrischen Rührbett muß die Beziehung Radius $r$ : Höhe $h = 1 : 1$ bis $1 : 3$, insbesondere $1 : 1,2$ bis $1 : 2$ erfüllt sein.

(2) Das kleinteilige Polymerisat des zentrischen Rührbetts wird im peripheren Bereich des Rührbetts nach oben und im zentralen Bereich des Rührbetts nach unten bewegt, derart, daß im Rührbett eine Froudezahl von 0,4 bis 5, insbesondere 0,6 bis 3,5 gegeben ist.

Dieser Zustand des Rührbetts kann in der Praxis vom Fachmann ohne weiteres erreicht werden durch sinngemäße Anwendung der Lehre aus der DE-OS 2 539 103, insbesondere dann, wenn mit einem Wendelrührer gearbeitet wird, wie er in der DE-PS 1 218 265 oder EP-OS 512 beschrieben ist.

(3) Die Temperatur in der Polymerisationszone wird geregelt mittels gleichzeitiger Messung der Temperatur jeweils

(3.1) an mindestens einem Ort des durch die Beziehung $h \cdot \pi \cdot a^2$ — wobei a das innerste Zehntel des Radius' r des zentrischen Rührbetts ist — bestimmten, geometrisch walzenförmigen, inneren Teil des Rührbetts, sowie

(3.2) an mindestens einem Ort des durch die Beziehung $h \cdot \pi \cdot r^2 - h \cdot \pi \cdot a^2$ bestimmten, geometrisch symmetrisch-hohlwalzenförmigen, äußeren Teil des Rührbetts, mit den Maßgaben, daß die Gesamtzahl der Meßorte nicht mehr als zehn beträgt und daß die radiale Entfernung zwischen einem Meßort im inneren Teil (3.1) und einem Meßort im äußeren Teil (3.2) des Rührbetts nicht weniger als ein Zehntel von r beträgt.

Dieser Maßnahme kommt eine besondere Bedeutung für den Erfolg des erfindungsgemäßen Verfahrens zu.

Wie sich gezeigt hat, ist es für die Praxis von wünschenswerter Einfachheit und zugleich hoher Effizienz, mit je einem Meßort im inneren Teil (3.1) und im äußeren Teil (3.2) des Rührbetts zu arbeiten, etwa derart, daß der Meßort im inneren Teil (3.1) im mittleren oder unteren Drittel des Rührbetts und der Meßort im äußeren Teil (3.2) im oberen oder mittleren Drittel des Rührbetts liegt mit einer radialen Entfernung zwischen den beiden Meßorten von ein Zehntel r bis elf Zehntel r.

Es kann aber auch angebracht sein, mit mehr als insgesamt zwei Meßorten zu arbeiten, z. B. dann, wenn das Rührbett relativ groß ist und/oder sich eine relativ hohe Menge an Polymerisationswärme pro Zeiteinheit ergibt.

Die Temperaturmessung als solche kann mittels einschlägig üblicher Vorrichtungen, z. B. sog. »Temperaturfühler«, erfolgen; sie sind dem Fachmann geläufig und bedürfen keiner näheren Erläuterung.

(4) Die an den einzelnen Meßorten gleichzeitig ermittelten Ist-Temperaturen T werden zu einer Temperaturgröße $T_M$ zusammengefaßt, worauf durch die Differenz der Temperaturgröße $T_M$ von deren Sollwert der Regelvorgang ausgelöst wird, bzw. die an den einzelnen Meßorten gleichzeitig ermittelten Temperaturdifferenzen $\Delta T$ zwischen der jeweiligen Ist- und Soll-Temperatur werden zu einer Differenzgröße $\Delta T_M$ zusammengefaßt, worauf durch die Differenzgröße $\Delta T_M$ der Regelvorgang ausgelöst wird, mit der Maßgabe, daß beim Zusammenfassen der Ist-Temperaturen T bzw. der Temperaturdifferenzen $\Delta T$ jeder einzelne Meßwert mit nicht weniger als $\frac{40}{n}$ %

Gewicht — wobei n für die Gesamtzahl der Meßorte steht — in die Temperaturgröße $T_M$ bzw. die Differenzgröße $\Delta T_M$ eingeht.

Dieses Charakteristikum der erfindungsgemäßen Arbeitsweise ist eine Maßnahme, die mit dazu dient, den jeweils gewünschten kontinuierlich-stationären Zustand des Polymerisationsverfahrens über eine möglichst lange Zeit möglichst konstant zu halten. Dementsprechend wird man im allgemeinen die Inbetriebnahme des erfindungsgemäßen Verfahrens sowie seine anschließende Optimierung bis zum gewünschten Zustand (= »Anfahrphase«) — so, wie auch anderweit üblich — »von Hand« vornehmen und dann zur Verfahrenssteuerung gemäß (4) übergehen; wobei sich von selbst versteht, daß zum einen die im Endstadium der Anfahrphase gemäß (3) abgegriffenen, für den inneren sowie den äußeren Teil des Rührbetts jeweils für sich als optimal ermittelten Temperaturen die Sollwerte ergeben und daß zum anderen der im Endstadium der Anfahrphase festgestellte Einfluß der einzelnen Ist-Temperaturen T bzw. einzelnen Temperaturdifferenzen $\Delta T$ an den verschiedenen Meßorten auf das Verfahrensergebnis das Gewicht dieser Meßwerte untereinander beim Auslösen des Regelvorgangs ergeben.

Wie die Praxis gezeigt hat, ist es — wenn man mit zwei Meßstellen arbeitet — beim Zusammenfassen der Ist-Temperatur $T_{3.1}$ im inneren Teil (3.1) mit der Ist-Temperatur $T_{3.2}$ im äußeren Teil (3.2) des Rührbetts zur Temperaturgröße $T_M$ im allgemeinen zweckmäßig, die Zusammenfassung nach der Gleichung

$$T_M = f \cdot T_{3.1} + (1-f) \cdot T_{3.2}$$

mit $f = 0{,}25$ bis $0{,}75$, vorzunehmen; wobei die nämliche Gleichung beim Einsetzen der obenerwähnten als optimal ermittelten Temperaturen für $T_{3.1}$ und $T_{3.2}$ in $T_M$ auch den Sollwert dieser Temperaturgröße wiedergibt.

Die entsprechende Datenverarbeitung ist auch mit relativ einfachen Vorrichtungen ohne weiteres möglich; der dabei letztlich resultierende Impuls bewirkt eine Steigerung oder Minderung der pro Zeiteinheit in die Reaktionszone eingebrachten Menge an flüssigem Monomer und damit eine Erhöhung oder Erniedrigung der Wärmeabfuhr. Die hierfür im einzelnen anzuwendenden Techniken können die jeweils einschlägig üblichen sein.

## Beispiel 1

Es wird gearbeitet mit einem Rührreaktor, dessen Innendurchmesser 2,7 m beträgt und der ein Nutzvolumen von etwa 25 m³ hat; der Rührer ist gemäß Fig. 1 der EP-OS 512 ausgestattet.

In dem Reaktor wird ein Propylen-Homopolymerisat hergestellt durch Polymerisation von Propylen mittels eines Ziegler-Natta-Katalysators bei einer Temperatur im Bereich von 75 bis 90° C und einem Druck von 30 bar in der Gasphase in einem zentrischen Rührbett aus kleinteiligem, einen Teilchendurchmesser von 0,1 bis 5 mm aufweisenden Polymerisat.

Der verwendete Ziegler-Natta-Katalysator besteht aus (I) einer Titantrichlorid-Komponente, die gemäß Beispiel 2 der DE-OS 2 400 190 hergestellt worden ist sowie (II) einer Aluminiumalkyl-Komponente, namentlich Diäthylaluminiumchlorid. Diese Katalysatorkomponenten werden getrennt voneinander in die Polymerisationszone eingebracht, und zwar 660 g/h der Komponente (I) sowie 1700 g/h der Komponente (II); was einem Molverhältnis Ti aus (I) : Al aus (II) von 1 : 5 entspricht.

Die weiteren Rahmenbedingungen sind gemäß der DE-AS 2 049 622 so gewählt, daß die Abfuhr der Polymerisationswärme durch Verdampfungskühlung erfolgt und daß man das Monomer kontinuierlich in die Polymerisationszone einbringt und das Polymerisat (etwa 2000 kg/h) taktweise aus der Polymerisationszone austrägt, mit den Maßgaben, daß man (a) in der Polymerisationszone den Druck und die Temperatur in einem Bereich hält, der dem gasförmigen Zustand des Monomeren entspricht (was durch die o. g. Bedingungen erfüllt ist), (b) gasförmiges, nicht durch Polymerisation verbrauchtes Monomer (etwa 11 000 kg/h) aus der Polymerisationszone austrägt, verflüssigt, speichert und flüssig in die Polymerisationszone wieder einbringt, (c) die Temperatur in der Polymerisationszone regelt mittels fortlaufender Messung der Temperatur und einer dadurch bei Temperaturänderung ausgelösten Änderung der pro Zeiteinheit eingebrachten Menge an flüssigem, in der Reaktionszone verdampfenden, Monomer, und (d) das durch Polymerisation verbrauchte Monomer durch Zufuhr von Frisch-Monomer ersetzt.

Im einzelnen ist das Polymerisationsverfahren erfindungsgemäß so ausgestaltet, daß

(1)    im zentrischen Rührbett die Beziehung Radius r : Höhe h = 1 : 1,2 erfüllt ist,

(2)    das kleinteilige Polymerisat des zentrischen Rührbetts im peripheren Bereich des Rührbetts nach oben und im zentralen Bereich des Rührbetts nach unten bewegt wird, derart, daß im Rührbett eine Froudezahl von 1,0 gegeben ist,

(3)    die Temperatur in der Polymerisationszone geregelt wird mittels gleichzeitiger Messung der Temperatur jeweils

(3.1) an einem Ort des durch die Beziehungen

$h \cdot \pi \cdot a^2$ — wobei a das innerste Zehntel des Radius' r des zentrischen Rührbetts ist — bestimmten, geometrischen walzenförmigen, inneren Teil des Rührbetts, nämlich unmittelbar an der Achse des Rührbetts im mittleren Drittel des Betts, sowie

(3.2) an einem Ort des durch die Beziehung $h \cdot \pi \cdot r^2 - h \cdot \pi \cdot a^2$ bestimmten, geometrisch symmetrisch-hohlwalzenförmigen, äußeren Teil des Rührbetts, nämlich in 68 cm Abstand von der Achse des Rührbetts im oberen Drittel des Betts,
— womit die radiale Entfernung zwischen dem Meßort im inneren Teil (3.1) und dem Meßort im äußeren Teil (3.2) des Rührbetts etwa 5 Zehntel von r beträgt, — und

(4) die an den beiden Meßorten gleichzeitig ermittelten Ist-Temperaturen T zu einer Temperaturgröße $T_M$ zusammengefaßt werden, worauf durch die Differenz der Temperaturgröße $T_M$ von deren Sollwert ($= 80°C$) der Regelvorgang ausgelöst wird, mit der Maßgabe, daß beim Zusammenfassen der Ist-Temperaturen T jeder der beiden Meßwerte mit 50% Gewicht in die Temperaturgröße $T_M$ eingeht.
Dies entspricht dem Zusammenfassen der Ist-Temperatur $T_{3.1}$ im inneren Teil (3.1) mit der Ist-Temperatur $T_{3.2}$ im äußeren Teil (3.2) des Rührbetts zur Temperaturgröße $T_M$ nach der Gleichung

$$T_M = f \cdot T_{3.1} + (1 - f) \cdot T_{3.2}$$

mit $f = 0,5$; wobei die nämliche Gleichung beim Einsetzen der als optimal ermittelten Temperaturen für $T_{3.1}(= 75°C)$ und $T_{3.2}$ ($= 85°C$) in $T_M$ auch den Sollwert ($= 80°C$) dieser Temperaturgröße wiedergibt.

Auf diese Weise läßt sich das Polymerisationsverfahren über Monate ohne Störung betreiben; zudem wird eine sehr hohe zeitliche Konstanz der Eigenschaften des erhaltenen Polymerisats, insbesondere auch der morphologischen Eigenschaften, erreicht.

### Beispiel 2

Beispiel 1 wird wiederholt, wobei jedoch die Maßnahmenkataloge (3) und (4) wie folgt abgeändert werden:

(3) Die Temperatur in der Polymerisationszone wird geregelt mittels gleichzeitiger Messung der Temperatur jeweils

(3.1) an einem Ort des durch die Beziehung $h \cdot \pi \cdot a^2$ — wobei a das innerste Zehntel des Radius' r des zentrischen Rührbetts ist — bestimmten, geometrisch walzenförmigen, inneren Teil des Rührbetts, nämlich unmittelbar an der Achse des Rührbetts im unteren Drittel des Betts, sowie

(3.2) an drei Orten des durch die Beziehung $h \cdot \pi \, r^2 - h \cdot \pi \cdot a^2$ bestimmten, geometrisch symmetrisch-hohlwalzenförmigen, äußeren Teil des Rührbetts, nämlich

(3.2.1) in 68 cm Abstand von der Achse des Rührbetts im mittleren Drittel des Betts,

(3.2.2) in 68 cm Abstand von der Achse des Rührbetts im oberen Drittel des Betts sowie

(3.2.3) in 135 cm Abstand von der Achse des Rührbetts im mittleren Drittel des Betts,
— womit die radiale Entfernung zwischen dem Meßort im inneren Teil (3.1) und den Meßorten im äußeren Teil (3.2) des Rührbetts bei (3.2.1) und (3.2.2) etwa 5 Zehntel und bei (3.2.3) etwa 10 Zehntel von r beträgt.

(4) Die an den einzelnen Meßorten gleichzeitig ermittelten Temperaturdifferenzen $\Delta T$ zwischen der jeweiligen Ist- und Soll-Temperatur, nämlich

(4.1) $\Delta T_1$ am Meßort (3.1) mit einer Soll-Temperatur von $75°C$,

(4.2.1) $\Delta T_{2.1}$ am Meßort (3.2.1) mit einer Soll-Temperatur von $88°C$,

(4.2.2) $\Delta T_{2.2}$ am Meßort (3.2.2) mit einer Soll-Temperatur von $85°C$, sowie

(4.2.3) $\Delta T_{2.3}$ am Meßort (3.2.3) mit einer Soll-Temperatur von $78°C$,
werden zu einer Differenzgröße $\Delta T_M$ zusammengefaßt, worauf durch die Differenzgröße $\Delta T_M$ der Regelvorgang ausgelöst wird, — mit der Maßgabe, daß beim Zusammenfassen der Temperaturdifferenzen $\Delta T_1$ mit 25%, $\Delta T_{2.1}$ mit 50%, $\Delta T_{2.2}$ mit 12,5% und $\Delta T_{2.3}$ mit 12,5% Gewicht in die Differenzgröße $\Delta T_M$ eingehen.

Die Ergebnisse sind gleich gut wie in Beispiel 1.

### Patentanspruch

Verfahren zum Herstellen von Propylen-Homopolymerisaten oder Propylen-Copolymerisaten, die mehr als 50 Gewichtsprozent Propylen sowie weniger als 50 Gewichtsprozent anderer, 2 bis 6 Kohlenstoffatome aufweisender $\alpha$-Monoolefine einpolymerisiert enthalten, durch Polymerisation des bzw. der zugrundeliegenden Monomeren — im folgenden kurz als »das Monomer« bezeichnet — mittels eines Katalysators bei Temperaturen von 40 bis 150°C und Drücken von 10 bis 50 bar in der Gasphase in einem zentrischen Rührbett mit dem Radius r und der Höhe h aus kleinteiligem Polymerisat unter Abfuhr der Polymerisationswärme durch Verdampfungskühlung, wobei man das Monomer kontinuierlich oder taktweise in eine Polymerisationszone einbringt und das Polymerisat kontinuierlich oder taktweise aus der Polymerisationszone austrägt, mit den Maßgaben, daß man (a) in der Polymerisationszone den Druck und die Temperatur in einem Bereich hält, der dem gasförmigen Zustand des Monomer entspricht, (b) gasförmiges, nicht durch Polymerisation verbrauchtes Monomer aus der Polymerisationszone austrägt, verflüssigt, speichert und flüssig in die Polymerisationszone wieder einbringt, (c) die Temperatur in der Polymerisationszone regelt mittels fortlaufender Messung der Temperatur und einer dadurch bei Temperaturänderung ausgelösten Änderung der pro Zeiteinheit eingebrachten Menge an flüssigem, in der Reaktionszone verdampfenden, Monomer, und (d) das durch Polymerisation verbrauchte Monomer durch Zufuhr von Frisch-Monomer ersetzt; dadurch gekennzeichnet, daß

(1)  im zentrischen Rührbett die Beziehung r : h = 1 : 1 bis 1 : 3 erfüllt ist,

(2)  das kleinteilige Polymerisat des zentrischen Rührbetts im peripheren Bereich des Rührbetts nach oben und im zentralen Bereich des Rührbetts nach unten bewegt wird, derart, daß im Rührbett eine Froudezahl von 0,4 bis 5 gegeben ist,

(3)  die Temperatur in der Polymerisationszone geregelt wird mittels gleichzeitiger Messung der Temperatur jeweils

(3.1)  an mindestens einem Ort des durch die Beziehung $h \cdot \pi \cdot a^2$ — wobei a das innerste Zehntel des Radius' r des zentrischen Rührbetts ist — bestimmten, geometrisch walzenförmigen, inneren Teil des Rührbetts, sowie

(3.2)  an mindestens einem Ort des durch die Beziehung $h \cdot \pi \cdot r^2 - h \cdot \pi \cdot a^2$ bestimmten, geometrisch symmetrisch-hohlwalzenförmigen, äußeren Teil des Rührbetts, mit den Maßgaben, daß die Gesamtzahl der Meßorte nicht mehr als zehn beträgt und daß die radiale Entfernung zwischen einem Meßort im inneren Teil (3.1) und einem Meßort im äußeren Teil (3.2) des Rührbetts nicht weniger als ein Zehntel von r beträgt, und

(4)  die an den einzelnen Meßorten gleichzeitig ermittelten Ist-Temperaturen T zu einer Temperaturgröße $T_M$ zusammengefaßt werden und durch die Differenz der Temperaturgröße $T_M$ von deren Sollwert der Regelvorgang ausgelöst wird bzw. die an den einzelnen Meßorten gleichzeitig ermittelten Temperaturdifferenzen $\Delta T$ zwischen der jeweiligen Ist- und Soll-Temperatur zu einer Differenzgröße $\Delta T_M$ zusammengefaßt werden und durch die Differenzgröße $\Delta T_M$ der Regelvorgang ausgelöst wird, mit der Maßgabe, daß beim Zusammenfassen der Ist-Temperaturen T bzw. der Temperaturdifferenzen $\Delta T$ jeder einzelne Meßwert mit nicht weniger als $\frac{40}{n}$% Gewicht — wobei n für die Gesamtzahl der Meßsorte steht — in die Temperaturgröße $T_M$ bzw. die Differenzgröße $\Delta T_M$ eingeht.

## Claim

A process for the preparation of propylene homopolymers, or of propylene copolymers which contain more than 50 per cent by weight of propylene and less than 50 per cent by weight of other $\alpha$-monoolefins of 2 to 6 carbon atoms, as copolymerized units, by polymerizing the corresponding monomer(s) — hereinafter referred as »the monomer« for brevity's sake — by means of a catalyst, at from 40 to 150° C, under a pressure of from 10 to 50 bar, in the gas phase, in a centric stirred bed, having radius r and height h, of finely divided polymer, with removal of the heat of polymerization by evaporative cooling, wherein the monomer is introduced continously or periodically into a polymerization zone and the polymer is discharged continuously or periodically from the polymerization zone, with the provisos that (a) in the polymerization zone the pressure and temperature are kept in a range which corresponds to the gaseous state of the monomer, (b) gaseous monomer not consumed by the polymerization is discharged from the polymerization zone, liquefied, stored and reintroduced, as liquid, into the polymerization zone, (c) the temperature in the polymerization zone is regulated by continuously measuring the temperature and causing any change therein to trigger a change in the amount of liquid monomer, evaporating in the reaction zone, which is introduced per unit time, and (d) replacing the monomer consumed by polymerization through supplying fresh monomer, in which process

(1)  in the centric stirred bed, the relation r : h = 1 : 1 to 1 : 3 applies,

(2)  the finely divided polymer in the centric stirred bed is caused to move upward in the peripheral zone of the stirred bed and downward in the central zone of the stirred bed, in such a way as to give a Froude number of from 0.4 to 5,

(3)  the temperature in the polymerization zone is regulated by simultaneously measuring the temperature

(3.1)  at one or more points of the geometrically cylindrical inner part of the stirred bed which is defined by the relation $h \cdot \pi \cdot a^2$, where a is the innermost one-tenth of the radius r of the centric stirred bed, and

(3.2)  at one or more points of the outer part of the stirred bed, geometrically in the shape of a symmetrical hollow cylinder, defined by the relation $h \cdot \pi \cdot r^2 - h \cdot \pi \cdot a^2$, with the provisos that the total number of measurement points is not greater than ten and that the radial distance between a measurement point in the inner part (3.1) and a measurement point in the outer part (3.2) of the stirred bed is not less than one-tenth of r, and

(4)  the actual temperatures T determined simultaneously at the individual points of measurement are combined to give a temperature parameter $T_M$ and the difference of this parameter from the intended value triggers the regulating operation, or the temperature differences $\Delta T$ between the actual and intended temperatures, measured simultaneously at the individual points of measurement, are combined to give a difference parameter $\Delta T_M$ and this parameter triggers the regulating operation, with the proviso that in combining the actual temperatures R or the temperature differences $\Delta T$, each individual measured value has a weighting of not less than $\frac{40}{n}$%, where n is the total number of measurement points, in the temperature parameter $T_M$ or the difference parameter $\Delta T_M$.

## Revendication

Procédé pour l'obtention d'homopolymères du propylène ou de copolymères du propylène qui contiennent, en liaison polymère, plus de 50% en poids de propylène et moins de 50% en poids d'autres $\alpha$-monooléfines comportant 2 à 6 atomes de carbone, par polymérisation du ou des monomères de base — désignés ci-après par »le monomère« pour abréger — au moyen d'un catalyseur, à une température de 40 à 150°C et sous une pression de 10 à 50 bars, en phase gazeuse, dans un lit à agitation centrale de rayon r et de hauteur h, formé de polymère en petites particules, avec dissipation de la chaleur de polymérisation par refroidissement par évaporation, le monomère étant introduit en continu ou par intermittences dans une zone de polymérisation et le polymère étant extrait en continu ou par intermittences de la zone de polymérisation, avec ces dispositions particulières que: (a) dans la zone de polymérisation, on maintient la pression et la température dans une gamme qui correspond à l'état gazeux du monomère, (b) on extrait de la zone de polymérisation le monomère gazeux qui n'a pas été consommé par polymérisation, on le liquéfie, on le stocke et on le réintroduit à l'état liquide dans la zone de polymérisation, (c) on règle la température dans la zone de polymérisation au moyen d'une mesure continuelle de la température et d'une modification, déclenchée par celle-ci en cas de variation de la température, de la quantité, introduite par unité de temps, de monomère liquide qui s'évapore dans la zone de réaction, et (d) on remplace le monomère consommé par polymérisation par apport de monomère frais, caractérisé en ce que:

(1) dans le lit à agitation centrale, le rapport r : h = 1 : 1 à 1 : 3 est satisfait,

(2) le polymère en petites particules du lit à agitation centrale est mis en mouvement de bas en haut dans la région périphérique du lit à agitation et de haut en bas dans la région centrale du lit à agitation, de telle manière qu'il en résulte, dans le lit à agitation, un indice de Froude de 0,4 à 5,

(3) la température dans la zone de polymérisation est réglée au moyen de la mesure simultanée de la température

(3.1) en au moins un point de la partie interne du lit à agitation, ayant la forme géométrique d'un cylindre et définie par la relation $h \cdot \pi \cdot a^2$ — a étant le dixième le plus interne du rayon r du lit à agitation centrale — et

(3.2) en au moins un point de la partie interne du lit à agitation, ayant la forme géométrique d'un cylindre creux symétrique et définie par la relation $h \cdot \pi \cdot r^2 - h \cdot \pi \cdot a^2$, avec ces conditions que le nombre total des points de mesure ne soit pas supérieur à dix et que la distance radiale entre un point de mesure dans la partie interne (3.1) et un point de mesure dans la partie externe (3.2) du lit à agitation ne soit pas inférieure à un dixième de r, et

(4) les températures effectives T, déterminées simultanément aux différents points de mesure, sont combinées en une grandeur de température $T_M$ et le processus de réglage est déclenché par la différence entre la grandeur de température $T_M$ et la valeur de consigne de celle-ci, ou bien les différences de température $\Delta T$ entre température effective et température de consigne, déterminées simultanément aux différents points de mesure, sont combinées en une grandeur de différence $\Delta T_M$ et le processus de réglage est déclenché par la grandeur de différence $\Delta T_M$, avec cette disposition particulière que lors de la combinaison des températures effectives T ou des différences de température $\Delta T$, chaque valeur de mesure individuelle entre dans la grandeur de température $T_M$ ou la grandeur de différence $\Delta T_M$ avec un poids non inférieur à $\frac{40}{n}$% — n étant le nombre total des points de mesure.